# EUROPÄISCHE PATENTANMELDUNG

(11) **EP 3 246 636 A1**
(43) Veröffentlichungstag der Anmeldung: **22.11.2017**
(21) Anmeldenummer: 17162211.1
(22) Anmeldetag: 22.03.2017
(51) Int. Cl.: F24F 13/28, F24F 3/16, F24F 9/00, B01D 46/00, E01C 1/00

(54) **VORRICHTUNG ZUR REINIGUNG VON UMGEBUNGSLUFT**

(30) Priorität: 20.05.2016 DE 102016109301
(71) Anmelder: ebm-papst Mulfingen GmbH & Co. KG, 74673 Mulfingen (DE)
(72) Erfinder: ECCARIUS, Michael, 74673 Mulfingen (DE)
(74) Vertreter: Peter, Julian

(57) **Zusammenfassung**

Die Erfindung betrifft eine Vorrichtung zur Reduzierung einer Anzahl an Festkörperpartikeln aus einer Umgebungsluft, mit einem vordefinierten Behandlungsraum, der zumindest bereichsweise durch eine Einhausung eingegrenzt ist, wobei die Einhausung zumindest teilweise nichtkörperlich durch zumindest einen von einer Luftströmungserzeugungseinrichtung erzeugbaren Luftvorhang gebildet ist, und wenigstens einer mit der Umgebungsluft des Behandlungsraumes strömungsverbundenen Luftfiltereinrichtung, welche ausgebildet ist, Festkörperpartikel unmittelbar aus der Umgebungsluft des Behandlungsraumes zu filtern.

## Beschreibung

Die Erfindung betrifft eine Vorrichtung zur Reduzierung einer Anzahl an Festkörperpartikeln, insbesondere von Schwebstaub, Pflanzenpollen und dergleichen, aus der Umgebungsluft eines vordefinierten Behandlungsraums.

Schwebstaub kann alternativ als Gesamtstaub bezeichnet werden und ist auch als TSP (total suspended particulates) bekannt.

Die Erfindung findet auch Einsatz zur Reduzierung von Feinstaub, der vor allem in Städten zu immer größeren Belastungen führt und zum Teil durch Fahrzeuge (Verbrennung, Bremsstaub) oder andere Verbrennungseinrichtungen erzeugt, zum Teil durch Wind oder die Bewegung von Fahrzeugen aufgewirbelt wird.

Insbesondere in Bereichen, an denen mehrere partikelemittierende Quellen zusammentreffen oder hohes Verkehrsaufkommen durch mehrspurige Fahrbahnen und Kreuzungen zu verzeichnen ist, steigt die Anzahl der Festkörperpartikel stark an und kann langfristig zu gesundheitlichen Problemen führen.

Aus dem Stand der Technik sind bereits Verfahren und Vorrichtungen zur Reduzierung der Staubbelastung bekannt. Hierbei wird ein Reinigungsmedium als Extraktionsmittel in die Umgebungsluft gesprüht, um den Schwebstaub daran zu binden. Insbesondere sollen hierzu Aerosole verwendet werden. Die zu Grunde liegende Idee ist dabei, dass über das Extraktionsmittel eine Reinigung der Umgebungsluft erfolgt. Jedoch muss das Extraktionsmittel zusammen mit den daran gebundenen Partikeln wieder aufgefangen, gereinigt und entsorgt werden. Zudem sind Sprüheinrichtungen und Auffangmittel erforderlich. Weiterhin negativ an einer derartigen Lösung ist, dass der Raum, in den das Extraktionsmittel eingebracht wird zusätzlich mit Partikeln des Extraktionsmittels gesättigt wird und während der Reinigungsphase die Umgebungsluft aus einer Mischung aus Staub und Extraktionsmittel besteht. Beim Einbringen eines flüssigen Extraktionsmittels, beispielsweise von Wasser, im Bereich von Fahrbahnen wird ferner die Haftreibung reduziert und der Verschmutzungsgrad der Fahrzeuge erhöht.

Der Erfindung liegt deshalb die Aufgabe zugrunde, eine barrierefreie Vorrichtung zum zumindest temporären Reduzieren der Anzahl an Festkörperpartikeln bereit zu stellen, wobei die genannten Nachteile zumindest teilweise reduziert werden.

Diese Aufgabe wird durch die Merkmalskombination gemäß Patentanspruch 1 gelöst.

Erfindungsgemäß wird eine Vorrichtung zur Reduzierung einer Anzahl an Festkörperpartikeln aus der Umgebungsluft vorgeschlagen. Die Vorrichtung bestimmt einen vordefinierten Behandlungsraum, der zumindest bereichsweise durch eine Einhausung eingegrenzt ist. Die Einhausung ist zumindest teilweise nichtkörperlich und durch zumindest einen, von einer Luftströmungserzeugungseinrichtung erzeugbaren Luftvorhang gebildet. Die Vorrichtung umfasst ferner wenigstens eine mit der Umgebungsluft des Behandlungsraumes strömungsverbundene Luftfiltereinrichtung, die ausgebildet ist, die Festkörperpartikel unmittelbar, d.h. direkt und ohne, dass diese sich zunächst an ein anderes Medium anhaften, aus der Umgebungsluft des Behandlungsraumes zu filtern.

Der Behandlungsraum wird insbesondere in den Bereich vordefiniert bzw. gelegt, wo die Partikelemission auftritt, so dass im Behandlungsraum anfänglich eine erhöhte und über die Erfindung zu reduzierende Partikelkonzentration vorliegt. Der Behandlungsraum hat auch eine abschirmende Wirkung und verhindert eine Ausbreitung der Partikel in Bereiche außerhalb des Behandlungsraumes. Die Vorbestimmung des Behandlungsraumes auf bestimmte, emissionsstarke Bereiche, wie beispielsweise mehrspurige Straßenkreuzungen in Städten, schützt somit umliegende Bereiche und erhöht den Wirkungsgrad der erfindungsgemäßen Vorrichtung, da die relative Filterleistung bei stärker mit Festkörperpartikeln verschmutzter Luft größer ist.

Das unmittelbare Filtern der Festkörperpartikel aus der Umgebungsluft des Behandlungsraumes ist wirtschaftlicher als die bekannten Verfahren unter Nutzung eines Exktrationsmediums und beeinträchtigt die Umwelt während der Reinigungsphase nicht.

Ein weiterer entscheidender Vorteil der erfindungsgemäßen Lösung liegt in der barrierefreien Ausbildung der Vorrichtung durch die zumindest teilweise nichtkörperliche Einhausung. Grundsätzlich ist das Einhausen des Behandlungsraumes von Vorteil zur Abschottung und dadurch dezidierten Filtrierung der Umgebungsluft innerhalb des Behandlungsraumes. Die teilweise nichtkörperliche Einhausung durch Bildung eines Luftvorhangs ermöglicht, ein barrierefreies Eintreten oder Einfahren in den Behandlungsraum, da lediglich der durch eine Luftströmung gebildete Luftvorhang durchdrungen wird. Auch optisch beeinträchtigt der Luftvorhang die Umwelt nicht.

In einer Ausführung der Vorrichtung ist jedoch vorgesehen, dass die Einhausung bereichsweise körperlich, d. h. beispielsweise über eine oder mehrere Wände, ein Dach und/oder eine Rahmenkonstruktion gebildet ist. Eine körperliche Grenze in Form einer Wand oder eines Daches erhöht die Leistungsfähigkeit der Vorrichtung und bietet Befestigungspunkte für die wenigstens eine Luftströmungserzeugungseinrichtung bzw. die Luftfiltereinrichtung.

Als körperlicher Teil der Einhausung wird in einem Ausführungsbeispiel vorgesehen, dass diese zumindest teilweise durch ein luftdurchlässiges Element gebildet ist. Insbesondere ist eine Ausführung günstig, bei der als luftdurchlässiges Element ein Gitter den Boden des Behandlungsraums bildet. Als Boden ist dabei auch die Fahrbahn einer Straße umfasst. Eine derartige Lösung bietet die vorteilhafte Möglichkeit, die Luftfiltereinrichtung unmittelbar an den Behandlungsraum angrenzend zu verbauen und eine direkte und kostengünstige Strömungsverbindung herzustellen. In den Boden können mit dem Gitter abgedeckte Schächte verlegt werden, in denen die Luftfiltereinrichtungen angeordnet und versorgt werden. Weiterhin ist eine Anordnung in dieser Weise vorteilhaft hinsichtlich des Wirkungsgrades der Reinigungsleistung der Vorrichtung, da die Abscheidung der Festkörperpartikel durch Filtrierung in unmittelbarer Nähe der Emissionsquellen und dadurch vor der Partikelausbreitung erfolgt.

In einer alternativen Ausführungsvariante werden die Luftfiltereinrichtungen innerhalb des Behandlungsraumes angeordnet. Bei einer derartigen Lösung wird die Umgebungsluft des Behandlungsraumes unmittelbar angesaugt, in der jeweiligen Luftfiltereinrichtung von Feststoffpartikeln gereinigt und wieder in den Behandlungsraum oder den Bereich außerhalb ausgeblasen.

Als Luftströmungserzeugungseinrichtung wird in einer vorteilhaften Ausführung wenigstens ein Ventilator verwendet. Dabei ist günstig, dass der Ventilator bezüglich seiner Wurfweite und/oder Wurfform einstellbar ist. Zur Erzeugung des Luftvorhangs (im Englischen auch als "air curtain" bekannt) eignen sich insbesondere Torluftschleieranlagen mit breitem Querschnitt. Derartige Ventilatoren können eine Luftabschottung zwischen dem Behandlungsraum und dem Bereich außerhalb des Behandlungsraumes erzeugen, die einen Austausch von Festkörperpartikeln verhindert. Additiv oder alternativ zu der Verwendung wenigstens eines Ventilators als Luftströmungserzeugungseinrichtung können Ventilatorgruppen gleicher und, oder ungleicher Baugröße und Leistung, vorzugsweise in aufeinander abgestimmter Weise zum Einsatz kommen.

Für den Luftvorhang sind hohe Strömungsgeschwindigkeiten vorteilhaft und vorgesehen. Hierzu weisen die Ventilatoren eine hohe Ausstoßleistung auf. Die Luftfiltereinrichtung sind hingegen ausgebildet ist, Luft aus dem Behandlungsraum zu saugen, wobei deren Ansaugleistung geringer festgelegt wird als die Ausstoßleistung der Ventilatoren. Die sich daraus ergebenden unterschiedlichen Strömungsgeschwindigkeiten zwischen dem Luftvorhang und der Absaugung führen zu stabilen Luftverhältnissen ohne unerwünschte Turbulenzen im Bereich des Luftvorhangs.

In einer Weiterbildung der Erfindung ist vorgesehen, dass zumindest eine Luftansaugungseinrichtung vorgesehen ist, welche ausgebildet ist, auf den Luftvorhang saugend einzuwirken. Der Luftvorhang wird dadurch stabilisiert, so dass beispielsweise hindurchfahrende Fahrzeuge keinen wesentlichen Luftaustausch zu einem Bereich außerhalb des Behandlungsraumes erzeugen. Günstig ist hierbei eine Ausführung, bei der die Luftansaugungseinrichtung in einer Ebene mit und gegenüberliegend zur Luftströmungserzeugungseinrichtung angeordnet ist, so dass die von der Luftströmungserzeugungseinrichtung erzeugte Luftströmung in der einen Ebene von der Luftansaugungseinrichtung angesaugt wird. Der Luftvorhang kann somit gerade in einer Ebene erzeugt werden. Vorteilhafterweise verläuft die Ebene in Schwerkraftrichtung.

In einem Ausführungsbeispiel der Vorrichtung ist die Luftfiltereinrichtung in die Luftansaugungseinrichtung integriert. Der Luftvorhang fördert ständig Feststoffpartikel aus dem Behandlungsraum mit sich und wird durch die Luftansaugungseinrichtung angesaugt und unmittelbar darin gereinigt. Das Zusammenfassen von Luftansaugungseinrichtung und Luftfiltereinrichtung reduziert die notwendige Bauteilzahl und mithin die Kosten. Als Luftansaugungseinrichtung sind ebenfalls saugend wirkende Ventilatoren einsetzbar.

Die Luftströmungserzeugungseinrichtung bzw. der Ventilator weist in einer Ausführungsvariante ein Ionisationsmodul auf, über das die ausgeblasene Luft ionisierbar ist. Hierbei wird die Anhaftungsneigung der Feststoffpartikel vergrößert, so dass die von der Luftansaugungseinrichtung angesaugte und zu filternde Luft verhältnismäßig mehr Feststoffpartikel aufweist und sich dadurch die Filterleistung erhöht.

Bei Verwendung einer Vielzahl von Luftfiltereinrichtungen ist vorteilhaft, dass diese lageveränderlich an der Einhausung positionierbar sind. Dies ist beispielsweise über ein Schienensystem realisierbar, an dem die Luftfiltereinrichtungen bezüglich ihrer Position verlagerbar befestigt sind.

Als Filter für die Feststoffpartikel können aus dem Stand der Technik bekannte mechanische Filter eingesetzt werden, die in regelmäßigen Abständen getauscht werden. Auch sind Rückspülfilter einsetzbar, die ohne einen Austausch von Filterelementen funktionieren und die Feststoffpartikel in einer Flüssigkeit binden. Vorteilhaft ist ferner eine Ausführung der Luftfiltereinrichtung mit einem sich zyklisch selbstreinigenden Filter, wie es beispielsweise bei Dieselpartikelfiltern bekannt ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen beispielhaft:
- Fig. 1: eine schematische Darstellung der Vorrichtung an einer Straße,
- Fig. 2: eine alternative Ausführung der Vorrichtung aus Fig. 1.

Gleiche Bezugszeichen benennen gleiche Teile bzw. Elemente in allen Ansichten. Die Figuren dienen ausschließlich zum besseren Verständnis der Erfindung.

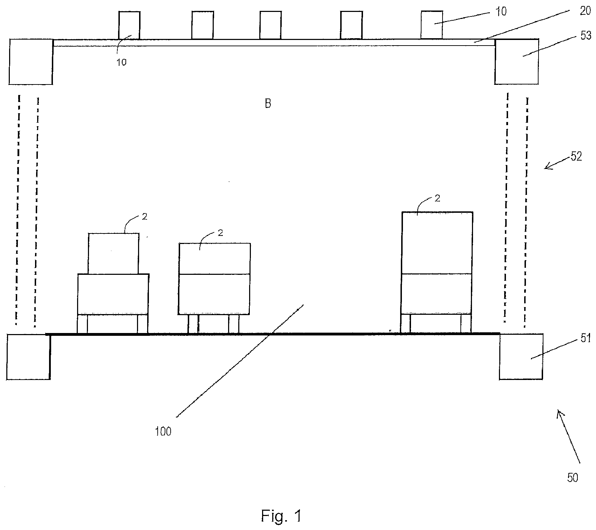

In Figur 1 ist beispielhaft schematisch eine Vorrichtung 50 zu Reduzierung einer Anzahl an Festkörperpartikeln aus der Umgebungsluft des vordefinierten Behandlungsraums B dargestellt. Der Behandlungsraum B grenzt über eine Einhausung eine mehrspurige Verkehrsinfrastruktur 100 mit mehreren partikelemittierenden und Schwebstaub aufwirbelnden Fahrzeugen 2 ein. Der Behandlungsraum B weist mithin eine Umgebungsluft mit hohem Feststoffpartikelanteil auf. Als körperlicher Teil der Einhausung ist ein Dach 20 vorgesehen, das über einen nicht dargestellten Rahmen oder Stützen gehalten ist. Die vier Seiten des Behandlungsraumes B sind zwar offen, seine Einhausung erfolgt in diesem Bereich jedoch nichtkörperlich durch Luftvorhänge 52, die von Ventilatoren 53 gebildet werden. Die Ventilatoren 53 erzeugen einen Luftstrom, der geeignet ist, eine Abschottung des Behandlungsraums B gegenüber der Umgebung zu erzeugen. Zudem sind saugende Ventilatoren 51 vorgesehen, die den Luftvorhang ansaugen und stabilisieren. Die saugenden Ventilatoren 51 sind in einer Ebene und gegenüberliegend zu den Ventilatoren 53 angeordnet ist, so dass die Luftvorhänge 52 im Wesentlichen gerade in Schwerkraftrichtung verlaufen.

Entlang der Fahrbahn wird eine an die Größe des Behandlungsraumes B angepasst Anzahl an Ventilatoren 53 und 51 angeordnet, um einen durchgängigen Luftvorhang 52 zu realisieren. In der gezeigten Ausführungsvariante sind auf dem Dach 20 verteilt mehrere mit der Umgebungsluft des Behandlungsraumes B strömungsverbundene Luftfiltereinrichtungen 10 angeordnet, die unmittelbar Festkörperpartikel aus der Umgebungsluft des Behandlungsraumes B saugen, filtern und die gefilterte Luft in den Behandlungsraum B zurückführen oder an die Umgebung abgeben.

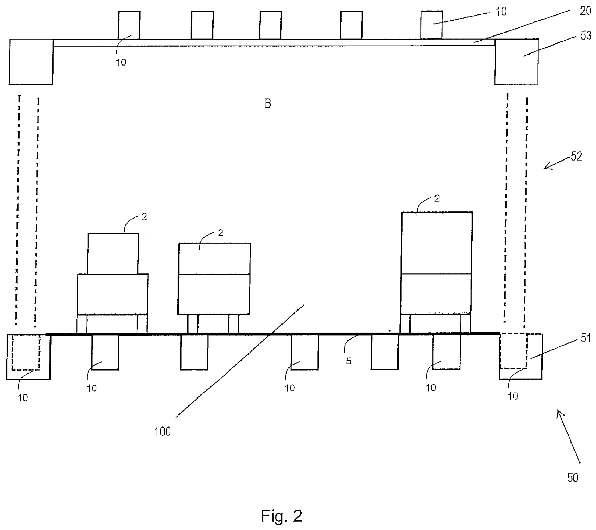

Bezugnehmend auf Figur 2 wird ein alternatives Ausführungsbeispiel aufgezeigt, wobei die zu Figur 1 identischen Merkmale nicht erneut beschrieben, jedoch Bestandteil der Ausführung sind. Der Fahrbahnboden ist durch ein luftdurchlässiges Gitter 5 gebildet, an das sich anschließend zusätzliche Luftfiltereinrichtungen 10 in einem Schacht angeordnet sind, die mit dem Behandlungsraum 10 in unmittelbarer Strömungsverbindung stehen. Zusätzlich sind Luftfiltereinrichtungen 10 in die saugenden Ventilatoren 51 integriert, um die im Bereich der Luftvorhänge 52 erzeugte Luftströmung zu reinigen.

Je nach notwendiger Filterleistung ist auch vorsehbar, die Luftfiltereinrichtungen 10 nur in die saugenden Ventilatoren 51 zu integrieren, ohne dass dies gesondert dargestellt wäre.

## Patentansprüche

**1.** Vorrichtung zur Reduzierung einer Anzahl an Festkörperpartikeln aus einer Umgebungsluft, mit einem vordefinierten Behandlungsraum, der zumindest bereichsweise durch eine Einhausung eingegrenzt ist, wobei die Einhausung zumindest teilweise nichtkörperlich durch zumindest einen von einer Luftströmungserzeugungseinrichtung erzeugbaren Luftvorhang gebildet ist, und wenigstens einer mit der Umgebungsluft des Behandlungsraumes strömungsverbundenen Luftfiltereinrichtung, welche ausgebildet ist, Festkörperpartikel unmittelbar aus der Umgebungsluft des Behandlungsraumes zu filtern.

**2.** Vorrichtung nach Anspruch 1, **dadurch gekennzeichnet, dass** die Einhausung bereichsweise körperlich gebildet ist.

**3.** Vorrichtung nach Anspruch 1 oder 2, **dadurch gekennzeichnet, dass** die Luftströmungserzeugungseinrichtung wenigstens ein Ventilator ist und der wenigstens eine Ventilator bezüglich seiner Wurfweite und/oder Wurfform einstellbar ist.

**4.** Vorrichtung nach Anspruch 3, **dadurch gekennzeichnet, dass** die Lufterzeugungseinrichtung durch mehrere Ventilatoren gleicher oder ungleicher Baugröße und/oder Strömungsleistung gebildet ist.

**5.** Vorrichtung nach Anspruch 1, **dadurch gekennzeichnet, dass** die Lufterzeugungseinrichtung durch eine FanWall bestehend aus einer Mehrzahl von in Reihe angeordneten Ventilatoren gebildet ist.

**6.** Vorrichtung nach zumindest einem der vorigen Ansprüche, **dadurch gekennzeichnet, dass** zumindest eine Luftansaugungseinrichtung vorgesehen ist, welche ausgebildet ist, auf den Luftvorhang saugend einzuwirken.

**7.** Vorrichtung nach dem vorigen Anspruch, **dadurch gekennzeichnet, dass** die Luftansaugungseinrichtung in einer Ebene mit und gegenüberliegend zur Luftströmungserzeugungseinrichtung angeordnet ist, so dass die von der Luftströmungserzeugungseinrichtung erzeugte Luftströmung in der einen Ebene von der Luftansaugungseinrichtung ansaugbar ist.

**8.** Vorrichtung nach zumindest einem der vorigen Ansprüche, **dadurch gekennzeichnet, dass** die zumindest eine Luftströmungserzeugungseinrichtung ein Ionisationsmodul umfasst und über die zumindest eine Luftströmungserzeugungseinrichtung ionisierte Luft ausblasbar ist.

**10.** Vorrichtung nach zumindest einem der vorigen Ansprüche, **dadurch gekennzeichnet, dass** die Luftfiltereinrichtung außerhalb des Behandlungsraumes angeordnet ist oder in die Luftansaugungseinrichtung integriert ist.

**11.** Vorrichtung nach zumindest einem der vorigen Ansprüche 1 bis 10, **dadurch gekennzeichnet, dass** die Luftfiltereinrichtung ausgebildet ist, Luft aus dem Behandlungsraum zu saugen, wobei eine Ansaugleistung der Luftfiltereinrichtung geringer ist als eine Ausstoßleistung der Luftströmungserzeugungseinrichtung.

**12.** Vorrichtung nach zumindest einem der vorigen Ansprüche, **dadurch gekennzeichnet, dass** die Luftfiltereinrichtung über einen Kanal mit dem Behandlungsraum strömungsverbunden ist.

**13.** Vorrichtung nach zumindest einem der vorigen Ansprüche, **dadurch gekennzeichnet, dass** die Einhausung zumindest teilweise durch wenigstens ein luftdurchlässiges Element gebildet ist.

**14.** Vorrichtung nach dem vorigen Anspruch, **dadurch gekennzeichnet, dass** das Element ein Gitter ist, das einen Boden des Behandlungsraums bildet und dass die Luftfiltereinrichtung über das Gitter mit dem Behandlungsraum strömungsverbunden ist.

**15.** Vorrichtung nach zumindest einem der vorigen Ansprüche, **dadurch gekennzeichnet, dass** die Luftfiltereinrichtung einen sich zyklisch selbstreinigenden Filter oder einen Rückspülfilter aufweist.
